# EUROPÄISCHE PATENTANMELDUNG

(11) **EP 1 376 933 A1**
(43) Veröffentlichungstag der Anmeldung: **02.01.2004**
(21) Anmeldenummer: 02014157.8
(22) Anmeldetag: 25.06.2002
(51) Int. Cl.: H04L 12/26, H04L 29/06

(54) **Verfahren und Anordnung zum ferngesteuerten Testen eines Prüflings**

(71) Anmelder: SIEMENS AKTIENGESELLSCHAFT, 80333 München (DE)
(72) Erfinder: Zainzinger, Harald, 1110 Wien (AT); Zeilinger, Josef, 1190 Wien (AT); Fuchs, Andreas, 1020 Wien (AT)
(74) Vertreter: Berg, Peter, Dipl.-Ing.

(57) **Zusammenfassung**

Verfahren und Anordnung zum ferngesteuerten Testen eines Prüflings.

Es wird ein Verfahren und eine Anordnung zum ferngesteuerten Testen eines Prüflings (PRÜ) angegeben, wobei die Daten bei der Steuerung (STR) und beim Prüfling (PRÜ) in einem Format vorliegen, das einem Übertragungsprotokoll für die ungesicherte Datenübertragung entspricht. Dabei werden die Daten in ein Format umgewandelt, das einem Übertragungsprotokoll für die gesicherte Datenübertragung entspricht, übermittelt und vor dem Empfangen wieder in ein dem Übertragungsprotokoll für die ungesicherte Datenübertragung entsprechendes Format umgewandelt.

## Beschreibung

Die Erfindung betrifft ein Verfahren zum ferngesteuerten Testen eines Prüflings, wobei die Daten bei der Steuerung und beim Prüfling in einem Format vorliegen, das einem Übertragungsprotokoll für die ungesicherte Datenübertragung entspricht. Weiterhin betrifft die Erfindung eine Anordnung zur Durchführung des erfindungsgemäßen Verfahrens.

Im Gegensatz zu früher werden heute Tests häufig nicht mehr vor Ort, also direkt beim Prüfling, durchgeführt sondern von einem anderen Ort aus, also ferngesteuert. Dies bringt mit sich, dass Daten, insbesondere Messergebnisse, auf der Übertragungsstrecke zwischen Steuerung und Prüfling verfälscht werden können, vor allem dann, wenn die Übertragung der Daten entsprechend einem Übertragungsprotokoll für die ungesicherte Datenübertragung erfolgt. Eine gesicherte Aussage, ob das Messergebnis die tatsächliche Situation beim Prüfling widerspiegelt ist somit nicht mehr möglich.

Ein Beispiel für ein Übertragungsprotokoll für die ungesicherte Datenübertragung ist das User Datagram Protocol, kurz UDP. Bei UDP wird auf Fehlererkennung und -korrektur verzichtet, weswegen die Bearbeitung der Datenpakete weniger Zeit in Anspruch nimmt. Weiterhin verfügt ein Datenpaket über einen kleinern Header und damit über ein besseres Verhältnis von Nutzdaten zu Paketlänge.

UDP ist daher besser geeignet bei Anwendungen, die kurze Nachrichten versenden und diese notfalls komplett wiederholen, oder bei Anwendungen, die in Echtzeit durchgeführt werden. Die gesamte Fehlerkorrektur erfolgt daher innerhalb der Anwendungsprogramme. Dies betrifft nicht nur Bitfehler, sondern auch den Totalverlust der Datenpakete, da Router bei hoher Netzlast UDP-Datagramme sofort verwerfen.

Aus den erwähnten Gründen ist für die Sicherung der Daten innerhalb von Steuerung und Prüfling ein aufwendiges Verfahren notwendig.

Aufgabe der Erfindung ist es daher, ein Verfahren und eine Anordnung anzugeben, welche das ferngesteuerte Testen eines Prüflings verbessern.

Die Aufgabe der Erfindung wird mit einem Verfahren gelöst,
- bei dem die Daten, welche beim Senden in dem Format vorliegen, das dem Übertragungsprotokoll für die ungesicherte Datenübertragung entspricht, in ein Format umgewandelt werden, das einem Übertragungsprotokoll für die gesicherte Datenübertragung entspricht,
- bei dem die Daten gemäß dem Übertragungsprotokoll für die gesicherte Datenübertragung übermittelt werden und
- bei dem die Daten vor dem Empfangen wieder in ein dem Übertragungsprotokoll für die ungesicherte Datenübertragung entsprechendes Format umgewandelt werden.

Dadurch ist einerseits die gesicherte Datenübertragung zumindest streckenweise gewährleistet, andererseits braucht eine eigene Sicherung seitens der Steuerung oder des Prüflings nicht zu erfolgen. Die Steuerung und der Prüfling, die beispielsweise bisher in einem ungesicherten Datennetz eingesetzt wurden, können bei der Anwendung des erfindungsgemäßen Verfahrens also unverändert weiterverwendet werden. Die gesicherte Datenübertragung ist daher mit geringem technischen Aufwand realisierbar.

Besonders vorteilhaft ist es dabei,
- wenn als Übertragungsprotokoll für die ungesicherte Datenübertragung das User Datagram Protocol vorgesehen wird,
- wenn als Übertragungsprotokoll für die gesicherte Datenübertragung das Transmission Control Protocol vorgesehen wird,
- wenn die Daten, welche beim Senden in einem Format vorliegen, das dem User Datagram Protocol entspricht, in ein Format umgewandelt werden, das dem Transmission Control Protocol entspricht,
- wenn die Daten gemäß dem Transmission Control Protocol übermittelt werden und
- wenn die Daten vor dem Empfangen wieder in ein dem User Datagram Protocol entsprechendes Format umgewandelt werden.

Bei dieser Variante der Erfindung wird auf erprobte und standardisierte Mittel zurückgegriffen. Eine Einführung des neuartigen Verfahrens ist daher auf besonders einfache Weise möglich.

Ursprünglich wurde das Transmission Control Protocol nämlich für die Datenübertragung zwischen Unix-Datenverarbeitungsanlagen entwickelt. Dort ist zusammen mit dem Internet Protocol, kurz IP, eine weit verbreitete Protokollkombination entstanden. Beide zusammen bilden auch die protokolltechnische Grundlage des Internet.

TCP ist ein verbindungsorientiertes Transportprotokoll, das eine logische Vollduplex-Punkt-zu-Punkt-Verbindung ermöglicht. Es stellt dabei sicher, dass Daten fehlerfrei und in der gewünschten Reihenfolge übertragen werden. Fehlerhafte oder verlorengegangene Daten werden beim Sender erneut angefordert

Der Verbindungsauf- und -abbau wird durch einen Drei-Wege-Handshake vorgenommen, bei dem Protokollinformationen für den Auf- und Abbau der logischen Verbindung zwischen Sender und Empfänger ausgetauscht werden. Fehler werden erkannt und in Grenzen korrigiert.

Günstig ist es auch, wenn die Umsetzung von der ungesicherten auf die gesicherte Datenübertragung und umgekehrt in einem Traffic Reliabler Device erfolgt.

Der Einsatz des Traffic Reliabler Device bildet die Grundlage, eine Datenumsetzung unabhängig von Steuerung oder Prüfling durchzuführen. Durch die abgesetzte Anordnung ist eine Einführung beziehungsweise in Folge eine Modifikation des Mechanismus für die Protokollumsetzung auf besonders einfache Weise möglich.

Eine weitere günstige Ausgestaltung der Erfindung ist mit einem Verfahren gegeben, bei dem im User Datagram Protocol vorliegenden Daten in ein Datenpaket gemäß dem Transmission Control Protocol verpackt werden.

Dabei werden die Daten vom User Datagram Protocol unverändert in ein Paket nach dem Transmission Control Protocol übernommen, das heißt die Daten werden in Folge getunnelt übertragen.

Die Aufgabe der Erfindung wird weiterhin mit einer Anordnung gelöst,
- bei der zwischen Steuerung und Prüfling zwei Module für die Umsetzung der Daten von einem Format, das dem Übertragungsprotokoll für die ungesicherte Datenübertragung entspricht, in ein Format, das einem Übertragungsprotokoll für die gesicherte Datenübertragung entspricht, und umgekehrt, angeordnet sind und
- bei der zwischen diesen beiden Modulen eine Datenübertragungsleitung zur Datenübertragung gemäß dem Übertragungsprotokoll für die gesicherte Datenübertragung angeordnet ist.

Durch die erfindungsgemäße Anordnung ist die gesicherte Datenübertragung zumindest streckenweise gewährleistet. Weiterhin braucht eine eigene Sicherung seitens der Steuerung oder des Prüflings nicht zu erfolgen. Die Steuerung und der Prüfling, die beispielsweise bisher in einem ungesicherten Datennetz eingesetzt wurden, können bei der Anwendung des erfindungsgemäßen Verfahrens also unverändert weiterverwendet werden. Es wird weiterhin angemerkt, dass die bei den verschiedenen Varianten des erfindungsgemäßen Verfahrens angeführten Vorteile gleichermaßen auch für die verschiedenen Ausgestaltungen der erfindungsgemäßen Anordnung gelten.

Günstig ist es dabei auch,
- wenn als Module Traffic Reliabler Devices vorgesehen sind,
- wenn zwischen Steuerung und Prüfling zwei Traffic Reliabler Devices angeordnet sind und
- wenn zwischen diesen beiden Traffic Reliabler Devices eine Datenübertragungsleitung zur Datenübertragung gemäß dem TCP angeordnet ist.

Hier wird eine gesicherte Datenübertragung durch den Einsatz von standardisierten Mitteln erreicht. TCP ist ein weit verbreitetes und anerkanntes Protokoll zur gesicherten Datenübertragung.

Vorteilhaft ist es weiterhin, wenn ein Traffic Relieabler Device direkt bei der Steuerung und eines direkt beim Prüfling angeordnet ist.

Durch möglichst nahe Anordnung des Traffic Relieabler Device bei der Steuerung beziehungsweise beim Prüfling kann ein Maximum an Übertragungsqualität erreicht werden. Denkbar ist aber auch die Integration des Traffic Relieabler Device in die Steuerung und/oder den Prüfling.

Die Erfindung wird anhand eines Ausführungsbeispiels näher erläutert, welches die streckenweise Datenübertragung zwischen Steuerung und Prüfling gemäß dem Transmission Control Protocol betrifft.

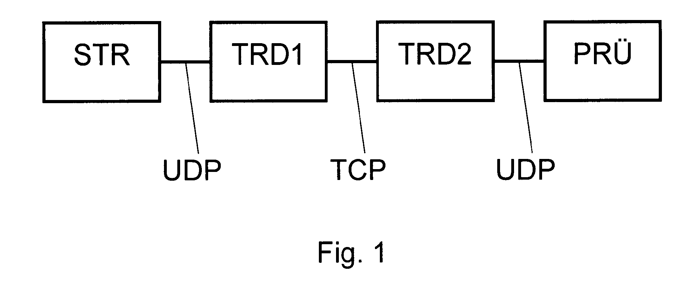

Die Figur 1 umfasst eine Steuerung STR, einen Prüfling PRÜ, sowie ein erstes und ein zweites Traffic Relieabler Device TRD1 und TRD2, wobei die Steuerung STR mit dem ersten Traffic Relieabler Device TRD1, dieses mit dem zweiten Traffic Relieabler Device TRD2 und dieses mit dem Prüfling PRÜ verbunden ist. Weiterhin ist angegeben, nach welchen Übertragungsprotokoll die Datenübertragung zwischen den einzelnen Moduln erfolgt, also zwischen Steuerung STR und erstem Traffic Relieabler Device TRD1 nach dem User Datagram Protocol UDP, zwischen erstem Traffic Relieabler Device TRD1 und zweitem Traffic Relieabler Device TRD2 nach dem Transmission Control Protocol TCP und zwischen zweitem Traffic Relieabler Device TRD2 und Prüfling PRÜ wiederum nach dem User Datagram Protocol UDP.

Die Funktion der in Figur 1 dargestellten Anordnung ist wie folgt:

Daten, also zum Beispiel Steuerbefehle, die von der Steuerung STR aus an den Prüfling PRÜ gesendet werden, werden bis zum ersten Traffic Relieabler Device TRD1 nach dem User Datagram Protocol UDP übertragen. Dort werden die Daten in entsprechende Pakete gepackt, die dem Transmission Control Protocol TCP entsprechen, und an das zweite Traffic Relieabler Device TRD2 gesendet. Die Übertragung erfolgt auf diesem Abschnitt also gesichert.

Beim zweiten Traffic Relieabler Device TRD2 werden die Pakete wieder entpackt und entsprechend dem User Datagram Protocol UDP zum Prüfling PRÜ übermittelt. Im Prüfling PRÜ wird der Steuerbefehl, der im gezeigten Beispiel eine Messung anstoßen soll, ausgewertet. In Folge wird also die entsprechende Messung durchgeführt und das Messergebnis wieder zur Steuerung zurück gesendet.

Die Daten werden dabei bis zum zweiten Traffic Relieabler Device TRD2 nach dem User Datagram Protocol UDP übertragen, dort in entsprechende Pakete gepackt, die dem Transmission Control Protocol TCP entsprechen, zum ersten Traffic Relieabler Device TRD1 weitergeschickt, im ersten Traffic Relieabler Device TRD1 in das User Datagram Protocol UDP umgewandelt, entsprechend dieses Protokolls zur Steuerung STR übermittelt und dort angezeigt.

Auf diese Weise ist gewährleistet, dass die Daten auf dem Abschnitt zwischen erstem Traffic Relieabler Device TRD1 und zweitem Traffic Relieabler Device TRD2 unverändert übertragen werden und beispielsweise die Messergebnisse nicht verfälscht werden. Durch möglichst nahe Anordnung des ersten Traffic Relieabler Device TRD1 bei der Steuerung STR beziehungsweise Integration in die Steuerung STR und möglichst nahe Anordnung des zweiten Traffic Relieabler Device TRD2 beim Prüfling PRÜ beziehungsweise Integration in den Prüfling PRÜ kann ein Maximum an Übertragungsqualität erreicht werden.

## Patentansprüche

1. Verfahren zum ferngesteuerten Testen eines Prüflings (PRÜ), wobei die Daten bei der Steuerung (STR) und beim Prüfling (PRÜ) in einem Format vorliegen, das einem Übertragungsprotokoll für die ungesicherte Datenübertragung entspricht,
**dadurch gekennzeichnet,**
- **dass** die Daten, welche beim Senden in dem Format vorliegen, das dem Übertragungsprotokoll für die ungesicherte Datenübertragung entspricht, in ein Format umgewandelt werden, das einem Übertragungsprotokoll für die gesicherte Datenübertragung entspricht,
- **dass** die Daten gemäß dem Übertragungsprotokoll für die gesicherte Datenübertragung übermittelt werden und
- **dass** die Daten vor dem Empfangen wieder in ein dem Übertragungsprotokoll für die ungesicherte Datenübertragung entsprechendes Format umgewandelt werden.

2. Verfahren nach Anspruch 1
**dadurch gekennzeichnet,**
- **dass** als Übertragungsprotokoll für die ungesicherte Datenübertragung das User Datagram Protocol (UDP) vorgesehen wird,
- **dass** als Übertragungsprotokoll für die gesicherte Datenübertragung das Transmission Control Protocol (TCP) vorgesehen wird,
- **dass** die Daten, welche beim Senden in einem Format vorliegen, das dem User Datagram Protocol (UDP) entspricht, in ein Format umgewandelt werden, das dem Transmission Control Protocol (TCP) entspricht,
- **dass** die Daten gemäß dem Transmission Control Protocol (TCP) übermittelt werden und
- **dass** die Daten vor dem Empfangen wieder in ein dem User Datagram Protocol (UDP) entsprechendes Format umgewandelt werden.

3. Verfahren nach Anspruch 2,
**dadurch gekennzeichnet,**
**dass** die Umsetzung von der ungesicherten auf die gesicherte Datenübertragung und umgekehrt in einem Traffic Reliabler Device (TRD) erfolgt.

4. Verfahren nach einem der Ansprüche 2 bis 3,
**dadurch gekennzeichnet,**
**dass** im User Datagram Protocol (UDP) vorliegenden Daten in ein Datenpaket gemäß dem Transmission Control Protocol (TCP) verpackt werden.

5. Anordnung zur Durchführung aller Schritte eines Verfahrens nach einem der Ansprüche 1 bis 4,
**dadurch gekennzeichnet,**
- **dass** zwischen Steuerung (STR) und Prüfling (PRÜ) zwei Module für die Umsetzung der Daten von einem Format, das dem Übertragungsprotokoll für die ungesicherte Datenübertragung entspricht, in ein Format, das einem Übertragungsprotokoll für die gesicherte Datenübertragung entspricht, und umgekehrt, angeordnet sind und
- **dass** zwischen diesen beiden Modulen eine Datenübertragungsleitung zur Datenübertragung gemäß dem Übertragungsprotokoll für die gesicherte Datenübertragung angeordnet ist.

6. Anordnung nach Anspruch 5,
**dadurch gekennzeichnet,**
- **dass** als Module Traffic Reliabler Devices (TRD) vorgesehen sind,
- **dass** zwischen Steuerung (STR) und Prüfling (PRÜ) zwei Traffic Reliabler Devices (TRD) angeordnet sind und
- **dass** zwischen diesen beiden Traffic Reliabler Devices (TRD) eine Datenübertragungsleitung zur Datenübertragung gemäß dem Transmission Control Protocol (TCP) angeordnet ist.

7. Anordnung nach Anspruch 6,
**dadurch gekennzeichnet,**
**dass** ein Traffic Relieabler Device (TRD) direkt bei der Steuerung (STR) und eines direkt beim Prüfling (PRÜ) angeordnet ist.
